(19) **Europäisches Patentamt**
**European Patent Office**
**Office européen des brevets**

(11) **EP 3 736 995 B1**

(12) **FASCICULE DE BREVET EUROPEEN**

(45) Date de publication et mention
de la délivrance du brevet:
**19.03.2025 Bulletin 2025/12**

(21) Numéro de dépôt: **20171469.8**

(22) Date de dépôt: **27.04.2020**

(51) Classification Internationale des Brevets (IPC):
**H04B 5/26** (2024.01)        **H04B 5/45** (2024.01)
**H04B 5/72** (2024.01)        **H04B 5/77** (2024.01)
**H04B 17/21** (2015.01)

(52) Classification Coopérative des Brevets (CPC):
**H04B 5/77; H04B 5/26; H04B 5/45; H04B 17/21**

(54) **PROCÉDÉ DE COMPENSATION D'UN DÉPHASAGE ENTRE LE SIGNAL ÉMIS PAR UN OBJET ET CELUI REÇU D'UN LECTEUR ÉQUIPÉ D'UN DÉTECTEUR D'ENVELOPPE ET OBJET CORRESPONDANT**

KOMPENSATIONSVERAFHREN EINER PHASENVERSCHIEBUNG ZWISCHEN EINEM VON EINEM GEGENSTAND AUSGESENDETEN SIGNAL UND DEM VON EINEM MIT EINEM HÜLLKURVENDETEKTOR AUSGESTATTETEN LESEGERÄT EMPFANGENEN SIGNAL, UND ENTSPRECHENDER GEGENSTAND

METHOD FOR COMPENSATING A PHASE SHIFT BETWEEN THE SIGNAL EMITTED BY AN OBJECT AND THAT RECEIVED FROM A READER PROVIDED WITH AN ENVELOPE DETECTOR AND CORRESPONDING OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.05.2019 FR 1904732**

(43) Date de publication de la demande:
**11.11.2020 Bulletin 2020/46**

(73) Titulaire: **STMicroelectronics (Rousset) SAS**
**13790 Rousset (FR)**

(72) Inventeurs:
• **CORDIER, Nicolas**
**13080 AIX EN PROVENCE (FR)**
• **TORNAMBE, Anthony**
**13790 ROUSSET (FR)**

(74) Mandataire: **Casalonga**
**Casalonga & Partners**
**Bayerstraße 71/73**
**80335 München (DE)**

(56) Documents cités:
**EP-A1- 3 280 065        EP-A2- 3 451 545**

## Description

Des modes de mise en œuvre et de réalisation de l'invention concernent la communication sans fil entre un lecteur et un objet, par exemple mais non limitativement un téléphone mobile émulé en mode carte, en particulier un objet NFC (« Near Field Communication »), et plus particulièrement la compensation d'un déphasage entre le signal émis par l'objet et celui reçu du lecteur lors d'une communication par modulation active de charge (ALM : Active Load Modulation), tout particulièrement lorsque le lecteur est équipé d'un détecteur d'enveloppe pour décoder les informations reçues de l'objet.

EP 3451545A2 décrit un procédé de fonctionnement d'un dispositif de communication qui communique par couplage inductif, consistant à ajuster une configuration de phase du dispositif de communication en réponse à au moins un paramètre système ou environnemental, à moduler un signal porteur avec la configuration de phase ajustée à l'aide d'une modulation de charge active (ALM), et transmettre le signal porteur modulé depuis le dispositif de communication pour couplage inductif. Ce paramètre environnemental peut être sélectionné parmi un ou plusieurs des éléments suivants : une information de distance, une information géométrique, un code de système, un code de technologie, un courant d'émetteur et/ou une puissance d'émetteur, un désaccord condition, un facteur de qualité et une fréquence de résonance d'un système résonant.

La communication champ proche, plus connue par l'homme du métier sous la dénomination anglo-saxonne NFC (« Near Field Communication ») est une technologie de connectivité sans fil qui permet une communication sur une courte distance, par exemple 10 cm, entre des dispositifs électroniques, comme par exemple des cartes à puce sans contact ou des téléphones mobiles émulés en mode carte, et des lecteurs.

La technologie NFC est particulièrement adaptée pour connecter tout type de dispositif utilisateur et permet des communications rapides et faciles.

Un objet sans contact est un objet capable d'échanger des informations via une antenne avec un autre objet sans contact, par exemple un lecteur, selon un protocole de communication sans contact.

Un objet NFC, qui est un objet sans contact, est un objet compatible avec la technologie NFC.

La technologie NFC est une plate-forme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

On peut également citer le protocole FeliCA, aussi connu sous la dénomination « technologie NFC-F », qui est normalisé dans la norme JIS.X.6319-4.

Outre sa fonction classique de téléphone, un téléphone mobile cellulaire peut être utilisé (s'il est équipé de moyens spécifiques) pour échanger des informations avec un autre dispositif sans contact, par exemple un lecteur sans contact, en utilisant un protocole de communication sans contact utilisable dans la technologie NFC.

Ceci permet d'échanger des informations entre le lecteur sans contact et des éléments sécurisés situés dans le téléphone mobile. De nombreuses applications sont ainsi possibles comme la billetterie mobile dans les transports publics (le téléphone mobile se comporte comme un ticket de transport) ou bien le paiement mobile (le téléphone mobile se comporte comme une carte de paiement).

Lors d'une transmission d'information entre un lecteur et un objet émulé en mode étiquette ou carte, le lecteur génère un champ magnétique par l'intermédiaire de son antenne qui est généralement dans les normes classiquement utilisées, une onde sinusoïdale à 13,56MHz. La force du champ magnétique est comprise entre 0,5 et 7,5 ampères/mètre RMS (« Root Mean Square » en anglais).

Deux modes de fonctionnement sont alors possibles, un mode passif ou un mode actif.

Dans le mode passif, seul le lecteur génère le champ magnétique et l'objet, émulé en mode étiquette ou carte, est alors passif et joue toujours le rôle de la cible.

Plus précisément, l'antenne de l'objet émulant l'étiquette ou la carte module le champ généré par le lecteur.

Cette modulation est effectuée en modifiant la charge connectée aux bornes de l'antenne de l'objet.

En modifiant la charge aux bornes de l'antenne de l'objet, l'impédance de sortie de l'antenne du lecteur change en raison du couplage magnétique entre les deux antennes. Il en résulte un changement dans les amplitudes et/ou les phases des tensions et courants présents au niveau des antennes du lecteur et de l'objet.

Et, de cette façon, les informations à transmettre depuis l'objet vers le lecteur sont transmises par modulation de charge aux courants d'antenne du lecteur.

La variation de charge effectuée lors de la modulation de charge se traduit par une modulation d'amplitude et/ou de phase du signal (tension ou courant) au niveau de l'antenne du lecteur. Une copie du courant d'antenne est générée et injectée dans la chaîne de réception du lecteur où ce courant est démodulé et traité de façon à extraire les informations transmises.

Dans le mode de fonctionnement actif, le lecteur et l'objet émulé en mode carte génèrent tous les deux un champ électromagnétique. Généralement, ce mode de fonctionnement est utilisé lorsque l'objet est pourvu d'une source d'alimentation propre, par exemple une batterie, comme c'est le cas dans un téléphone mobile cellulaire qui est alors émulé en mode carte.

Chacun des dispositifs NFC transmet les données en utilisant un schéma de modulation, typiquement un schéma de modulation en amplitude du type ASK (« Amplitude Shift Keying »).

Là encore, la modulation se traduit par une modification de charge et l'on parle alors d'une communication par modulation active de charge.

Par rapport à un mode de communication passif, on obtient des distances de fonctionnement plus importantes qui peuvent aller jusqu'à 20 cm en fonction du protocole utilisé.

Par ailleurs, l'utilisation d'une modulation active de charge permet d'utiliser des antennes très petites.

Cela étant, ce type de communication par modulation active de charge pose d'autres problèmes.

Il est souhaitable que, lors d'une communication par modulation active de charge, le signal transmis par le dispositif émulé en mode carte soit en phase ou en opposition de phase avec le signal reçu du lecteur de façon à avoir au niveau du lecteur et donc également au niveau du dispositif émulé en mode carte, une amplitude de modulation la plus grande possible en valeur absolue.

Un réglage de phase est généralement effectué au niveau du dispositif émulé en mode carte lors du développement (fabrication) du dispositif dans un environnement connu.

EP 3280065A1 propose un procédé et un système pour compenser le décalage de phase provoqué par le circuit intégré en utilisant une mesure d'usine stockée en tant que donnée de compensation dans le circuit intégré. Dans le produit client final, les données de compensation sont mappées sur l'environnement réel de la plate-forme de sorte que le décalage de phase respectif puisse être compensé.

Cependant cette contrainte d'obtention d'une amplitude de modulation la plus grande possible en valeur absolue introduit des problèmes d'interopérabilité avec certains lecteurs.

En effet, l'infrastructure de lecteurs sans contact n'est pas renouvelée fréquemment, en particulier dans le domaine des transports et l'objet émulé en mode carte doit pouvoir fonctionner avec des lecteurs anciens aux performances limitées, tels que ceux offrant une architecture de réception simple à détection d'enveloppe, contrairement aux architectures ayant deux voies I et Q en quadrature de phase.

Des exemples de tels lecteurs à détecteur d'enveloppe peuvent mettre en œuvre le protocole FeliCa.

Or les inventeurs ont observé que la distance entre de tels lecteurs à détecteur d'enveloppe et l'objet émulé en mode carte influence l'effet de couplage, en particulier lorsque cette distance est faible, par exemple inférieure à 50 mm, ce qui provoque un désaccord du système lecteur-objet, et introduit par conséquent un décalage de phase entre le signal reçu par le lecteur et le signal émis par l'objet ou inversement.

Il existe par conséquent un besoin pour réduire au maximum voire supprimer ce décalage de phase.

Selon un mode de mise en œuvre et de réalisation, il est proposé d'effectuer une telle compensation de phase dans l'objet émulé en mode carte, de façon simple, une fois pour toutes par exemple en fin de production de l'objet, c'est-à-dire avant son utilisation opérationnelle.

Un aspect et des modes de mise en œuvre de l'invention sont définis dans les revendications annexées.

Selon un aspect, il est proposé un procédé de réglage d'un objet capable de communiquer sans contact par modulation active de charge avec un lecteur équipé d'un détecteur d'enveloppe.

Le procédé comprend, par exemple lors de la production ou fabrication de l'objet, un étalonnage de l'objet avec un lecteur de référence du même type que ledit lecteur.

Cet étalonnage effectué d'une façon générale avant l'utilisation opérationnelle de l'objet, peut ne pas être effectué pendant la production proprement dite de l'objet, mais peut aussi être effectué par exemple lors de la phase de conception sur un prototype correspondant à cet objet, et cet étalonnage sera alors valable pour toute la famille d'objets produits correspondant à ce prototype.

Ce lecteur de référence comporte donc également un détecteur d'enveloppe.

Ce lecteur de référence peut être émulé à partir d'un banc de test conforme à la norme EMVCo ou bien être un lecteur identique aux lecteurs commercialisés qui seront amenés à communiquer avec ledit objet, par exemple un lecteur commercialisé mettant en œuvre le protocole FeliCa.

Ledit étalonnage comporte

- un placement du lecteur de référence à différentes distances de l'objet correspondant à différentes valeurs d'un paramètre au sein de l'objet représentatif de l'intensité du signal reçu par l'objet, et pour chaque distance, une détermination au sein de l'objet d'une compensation de déphasage interne à l'objet par rapport à un déphasage interne nominal, permettant d'obtenir une amplitude de modulation de charge supérieure en valeur absolue à un seuil, et

- un stockage dans l'objet d'une table de correspondance entre les différentes valeurs dudit paramètre et les compensations correspondantes de déphasage interne.

Lorsque ledit objet comprend un moyen de contrôle automatique de gain, lesdites valeurs du paramètre peuvent être les valeurs du gain.

En variante, ledit paramètre peut être une indication d'intensité du signal reçu par ledit objet, communément connu par l'homme du métier sous l'acronyme anglo-saxon RSSI (Received Signal Strength Indication).

Selon que le signal émis par l'antenne de l'objet et le signal reçu du lecteur sont en opposition de phase ou en phase, l'amplitude de la modulation peut être négative ou positive.

Par exemple si le déphasage, au niveau de l'antenne de l'objet, entre le signal émis par cette antenne et le signal reçu par cette antenne est de 180°, alors au niveau du lecteur, le signal émis par le lecteur et le signal reçu par le lecteur seront en phase, conduisant alors à une amplitude maximale positive de modulation de charge.

Le déphasage nominal interne à l'objet peut alors être choisi de façon à obtenir au niveau de l'antenne de l'objet un déphasage de 180° par exemple.

En pratique le seuil peut par exemple être fixé à 95% de la valeur maximale en valeur absolue de l'amplitude de modulation de charge.

Le procédé comprend également, lors d'une communication avec ledit lecteur de l'objet ainsi produit et donc étalonné, une détermination au sein de l'objet, de la valeur dudit paramètre et une application automatique dans ledit objet de ladite compensation de déphasage correspondant à la valeur de ce paramètre, à partir de ladite table de correspondance stockée.

Ainsi on obtiendra de facto une amplitude de modulation de charge supérieure en valeur absolue audit seuil.

Il serait possible lors de l'étalonnage de déterminer ladite compensation de déphasage interne à l'objet permettant d'obtenir une amplitude de modulation de charge supérieure en valeur absolue audit seuil, en mesurant directement au niveau du lecteur de référence l'amplitude de modulation de charge pour différentes valeurs de compensation de déphasage, en particulier si le lecteur de référence est émulé à partir d'un banc de test EMVCo ou en accédant aux composants internes du lecteur de référence.

Cela étant il existe une solution plus simple pour déterminer ladite compensation de déphasage interne à l'objet permettant d'obtenir une amplitude de modulation de charge supérieure en valeur absolue audit seuil, solution applicable par exemple à un lecteur de référence commercialisé que l'on ne souhaite pas « ouvrir ».

Plus précisément, selon cette solution, cette détermination de la compensation de déphasage interne permettant d'obtenir, pour une distance donnée, une amplitude de modulation de charge supérieure en valeur absolue audit seuil, comprend

- une définition d'un jeu de déphasages internes compris entre 0° et 360°, par exemple des déphasages mutuellement espacés d'une même valeur, par exemple 15°, et pour chaque déphasage dudit jeu,
- des envois successifs de commandes par le lecteur de référence et des émissions successives par l'objet de réponses auxdites commandes, par exemple des envois de 100 commandes,
- une comptabilisation du taux de réponses décodées avec succès par le lecteur de référence,
- une détermination des deux valeurs de déphasage correspondant aux deux plus faibles taux,
- la valeur de ladite compensation de déphasage associée à ladite distance et permettant d'obtenir une amplitude de modulation de charge supérieure en valeur absolue audit seuil, étant la valeur médiane entre lesdites deux valeurs correspondant aux deux plus faibles taux diminuée de la valeur du déphasage interne nominal.

Ainsi par exemple si la valeur nominale du déphasage interne correspond à un déphasage de 180° au niveau de l'antenne de l'objet et que les deux valeurs de déphasage interne correspondant aux plus faibles taux sont des valeurs de déphasage interne correspondant au niveau de l'antenne à des déphasages de 105° et 285°, alors la valeur médiane les deux valeurs de déphasage interne diminuée de la valeur du déphasage interne nominal, correspond au niveau de l'antenne à la valeur médiane 195° entre les deux valeurs 105° et 285° diminuée de 180°.

La valeur recherchée de ladite compensation de déphasage interne est donc dans cet exemple la valeur qui donnera au niveau de l'antenne une compensation de déphasage égale à 15° (195°-180°).

Lorsque l'objet et le lecteur de référence communiquent selon le protocole de communication FeliCa défini dans la norme JIS.X.6319-4, les commandes envoyées par le lecteur de référence sont par exemple des commandes SENSF_REQ définies dans la norme JIS.X.6319-4 et les réponses envoyées par l'objet sont par exemple des réponses SENSF_RES définies dans la norme JIS.X.6319-4.

Selon un autre aspect il est proposé un objet capable de communiquer sans contact par modulation active de charge avec un lecteur équipé d'un détecteur d'enveloppe.

L'objet comprend un contrôleur connecté à une antenne par l'intermédiaire d'un circuit d'adaptation d'impédance et formant ensemble un circuit résonant ayant une fréquence de résonance.

L'objet comprend également une mémoire contenant une table de correspondance résultant de l'application du procédé tel que défini ci-avant.

Le contrôleur est configuré pour, lors d'une communication avec le lecteur, déterminer un paramètre au sein de l'objet représentatif de l'intensité du signal reçu par l'objet et appliquer automatiquement dans ledit objet une compensation de déphasage correspondant à la valeur de ce paramètre, à partir de ladite table de correspondance stockée.

Selon un mode de réalisation le contrôleur peut comprendre un moyen de contrôle automatique de gain, et lesdites valeurs du paramètre sont les valeurs du gain.

En variante le contrôleur peut comprendre des moyens configurés pour mesurer une indication d'intensité du signal reçu par ledit objet, ledit paramètre étant cette indication d'intensité du signal reçu.

Selon un mode de réalisation, le contrôleur comprend un moyen de retard ajustable disposé sur la voie d'émission des signaux et des moyens de réglage configurés pour ajuster la valeur du retard de façon à obtenir la compensation de déphasage interne souhaitée.

Selon un mode de réalisation, le contrôleur est un contrôleur compatible avec une technologie de communication champ proche et configuré pour communiquer avec le lecteur selon le protocole de communication FeliCa défini dans la norme JIS.X.6319-4.

L'objet peut être par exemple un appareil de communication, tel qu'un téléphone portable ou une tablette ou encore une montre connectée sans que ces exemples ne soient limitatifs.

D'autres avantages et caractéristiques de l'invention apparaîtront à l'examen de la description détaillée de modes de mise en œuvre et de réalisation, nullement limitatifs, et des dessins annexés sur lesquels :

[Fig 1]
[Fig 2]
[Fig 3]
[Fig 4]
[Fig 5]
[Fig 6]

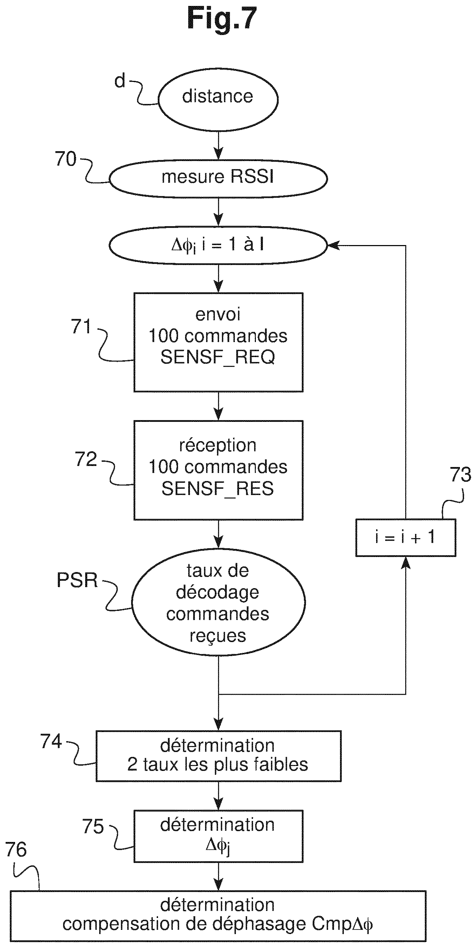

[Fig 7] et
[Fig 8]

illustrent différents modes de mise en œuvre et de réalisation de l'invention.

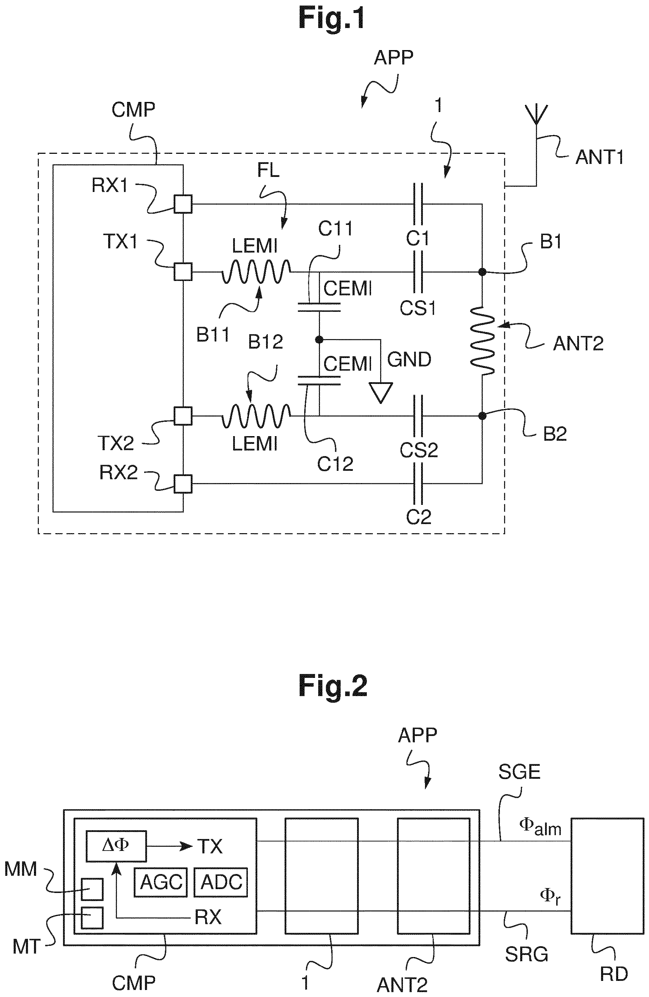

Sur la figure 1, la référence APP désigne un objet, ici un appareil de communication, par exemple un téléphone mobile cellulaire, équipé d'une antenne ANT1 pour l'établissement des communications téléphoniques.

Dans le cas présent, l'appareil APP comporte également un système NFC classique comportant un composant CMP sans contact du type NFC, par exemple un contrôleur ou puce NFC.

Le composant CMP peut être par exemple celui désigné au sein de STMicroelectronics sous la référence ST54J.

L'appareil est ici capable de communiquer sans contact avec un lecteur par modulation active de charge

Le contrôleur CMP possède de façon classique deux contacts TX1, TX2 utilisables en mode lecteur et en mode carte et deux autres contacts RX1, RX2 utilisables en mode lecteur et en mode carte.

En mode carte les deux contacts TX1 et TX2 sont utilisés pour générer la modulation active de charge.

Une antenne ANT2, par exemple un enroulement inductif, est utilisable pour la communication sans contact avec un dispositif externe. Une première borne B1 de cette antenne ANT2 est connectée aux contacts TX1 et RX1 tandis que la deuxième borne B2 de l'antenne ANT2 est connectée aux contacts TX2 et RX2.

Enfin, un circuit externe d'adaptation d'impédance 1 est connecté entre l'antenne ANT2 et le composant CMP.

Plus précisément, de façon classique et connue en soi, ce circuit d'adaptation d'impédance peut comporter un filtre FL destiné à filtrer les interférences électromagnétiques (filtre EMI).

Ce filtre FL est classiquement un filtre du type LC comportant ici une bobine B11 connectée en série, entre le contact TX1 et la masse GND, avec un condensateur C11.

Le filtre FL comporte également une bobine B12 connectée en série, entre le contact TX2 et la masse GND, avec un condensateur C12.

L'inductance de la bobine B11 et de la bobine B12 est égale à LEMI tandis que la valeur capacitive des condensateurs C11 et C12 est égale à CEMI.

Ces deux valeurs forment respectivement une inductance de référence et une valeur capacitive de référence pour le filtre EMI.

Ces valeurs de référence sont associées à une fréquence de coupure du filtre EMI, désigné ci-après fréquence de coupure de référence (par exemple 20 MHz pour une fréquence de porteuse de 13,56 MHz).

Et, ces valeurs de référence LEMI et CEMI sont choisies pour former un circuit résonant aux alentours de la fréquence de coupure de référence f du filtre FL.

Le circuit d'adaptation d'impédance comporte aussi les condensateurs C1, C2, CS1 et CS2.

Les condensateurs C1 et C2 forment un diviseur capacitif aux bornes des contacts RX1 et RX2.

Les condensateurs CS1 et CS2 sont quant à eux choisis pour maximiser le courant dans l'antenne ANT2 de façon à augmenter l'amplitude du champ électromagnétique.

De façon à avoir un fonctionnement optimisé, le composant CMP forme avec l'antenne ANT2 et le circuit externe de l'adaptation d'impédance un circuit résonant ayant une fréquence de résonance égale à la fréquence de porteuse, par exemple 13,56 MHz dans le cas d'un protocole de communication FeliCA défini dans la norme JIS.X.6319-4.

Cela étant, lors de la réalisation effective du circuit externe d'adaptation d'impédance, les inductances réelles et les valeurs capacitives réelles des différents éléments de ce circuit externe d'adaptation d'impédance peuvent varier par rapport aux valeurs théoriques en raison notamment de la dispersion technologique des bobines et condensateurs utilisés.

En utilisation normale, le lecteur émet un signal SGR qui présente une phase $\phi_r$. L'appareil de communication en mode carte répond aux commandes du lecteur par un signal SGE à la même fréquence présentant la phase $\phi_{alm}$ qui est égale à :

$$\phi_{alm} = \phi_r + \Delta\phi$$

Il y a donc un décalage de phase interne à l'objet égal à $\Delta\phi$ entre le signal émis par l'objet et le signal reçu du lecteur.

Ce décalage de phase interne résulte notamment des composants (résistances, condensateurs, inductances) de la voie d'émission et des composants (résistances, condensateurs, inductances) de la voie de réception.

Ce décalage Δϕ est ajusté en usine lors de la production de l'objet de façon à lui conférer une valeur nominale permettant d'obtenir au niveau de l'antenne de l'objet, un décalage de phase de 180° par exemple.

En effet avec un tel décalage de phase, on obtient un niveau d'amplitude de modulation supérieur en valeur absolue à un seuil. Ce seuil peut être par exemple égal à 95% du niveau maximal.

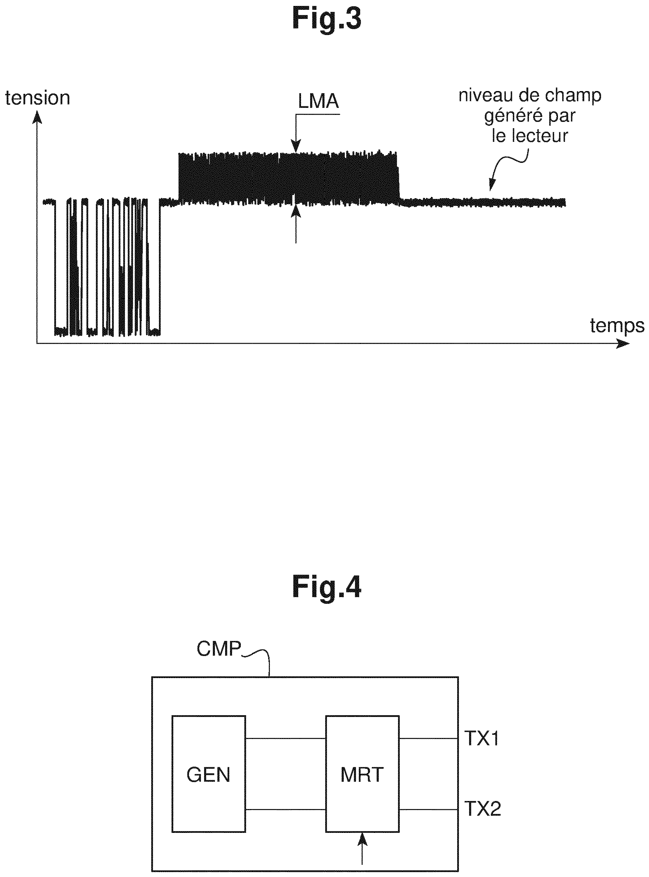

On rappelle que, comme illustré sur la figure 3, l'amplitude de modulation LMA, correspond à la différence de tension par rapport au niveau du champ généré par le lecteur.

En pratique, le réglage du déphasage Δϕ à sa valeur nominale, peut être obtenu, comme illustré sur la figure 4, en ajustant la valeur de retard de moyens de retard MRT disposés sur la voie d'émission du composant CMP et visant à retarder le signal initial généré par des moyens GEN de génération de la réponse.

Ce premier étalonnage effectué en usine permet notamment de connaître l'écart entre la valeur nominale de Δϕ et la valeur nominale de 180° du déphasage mesuré au niveau de l'antenne de l'objet, écart de déphasage qui, comme indiqué ci-avant, est dû aux composants (résistances, condensateurs, inductances) de la voie d'émission et aux composants (résistances, condensateurs, inductances) de la voie de réception.

Les inventeurs ont observé que la distance entre un lecteur à détecteur d'enveloppe, mettant par exemple en œuvre le protocole FeliCa, et l'objet émulé en mode carte influence l'effet de couplage, en particulier lorsque cette distance est faible, par exemple inférieure à 50 mm, ce qui provoque un désaccord du système lecteur-objet, et introduit par conséquent un décalage de phase entre le signal reçu par le lecteur et le signal émis par l'objet ou inversement.

De ce fait la valeur du décalage de phase Δϕ varie par rapport à sa valeur nominale étalonnée en usine.

Il est donc proposé d'appliquer automatiquement au sein de l'objet, une compensation de déphasage pour retrouver la valeur nominale de Δϕ.

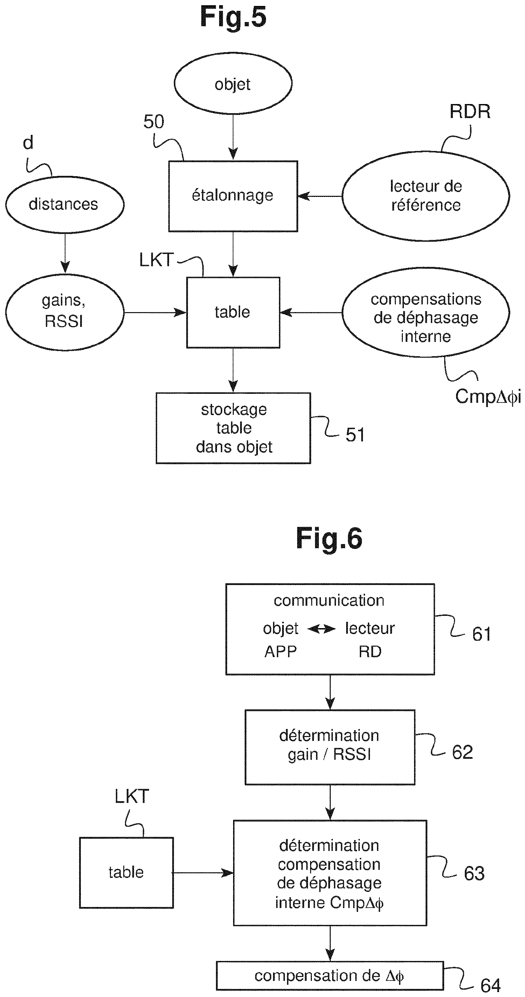

A cet égard il est proposé d'effectuer en usine un autre étalonnage 50 (figure 5) de l'objet APP avec un lecteur de référence RDR du même type que ledit lecteur.

Ce lecteur de référence RDR comporte donc également un détecteur d'enveloppe.

Ce lecteur de référence est par exemple un lecteur commercialisé mettant en œuvre le protocole FeliCa.

Ledit étalonnage 50 comporte

- un placement du lecteur de référence RDR à différentes distances d de l'objet APP correspondant à différentes valeurs d'un paramètre au sein de l'objet représentatif de l'intensité du signal reçu par l'objet, et pour chaque distance d, une détermination dans l'objet d'une compensation de déphasage CmpΔϕi interne à l'objet par rapport à un déphasage interne nominal, permettant d'obtenir une amplitude de modulation de charge supérieure en valeur absolue à un seuil, et

- un stockage 51 d'une table de correspondance LKT entre les différentes valeurs dudit paramètre et les compensations correspondantes de déphasage interne CmpΔϕi.

Lorsque ledit objet comprend un moyen de contrôle automatique de gain AGC (figure 2), lesdites valeurs du paramètre peuvent être les valeurs du gain.

En variante, ledit paramètre peut être une indication d'intensité du signal reçu par ledit objet, communément connu par l'homme du métier sous l'acronyme anglo-saxon RSSI (Received Signal Strength Indication).

Ce stockage de la table LKT est effectué dans une mémoire MM du composant CMP (Figure 2).

Puis, comme illustré sur la figure 6, lors d'une communication opérationnelle 61 entre l'objet APP et un lecteur RD de la même famille que le lecteur de référence RDR, le composant CMP détermine la valeur du paramètre (gain ou RSSI) dans une étape 62.

A cet égard, si, comme illustré sur la figure 2, le composant CMP comporte un moyen de contrôle automatique de gain AGC, le paramètre peut être alors la valeur correspondante du gain délivrée par le moyen AGC.

Le paramètre peut être aussi le paramètre RSSI qui est aisément obtenu par exemple à partir d'un convertisseur analogique numérique ADC.

Puis, dans une étape 63, une machine d'état MT implémentée dans le composant CMP (Figure 2) détermine à partir de la valeur du gain ou du paramètre RSSI et de la table LKT la compensation de déphasage interne CmpΔϕ à appliquer au déphasage interne nominal Δϕ de façon à obtenir au niveau de l'antenne par exemple un déphasage nominal de 180°.

Cette compensation de Δϕ, CmpΔϕ, est appliquée dans l'étape 64.

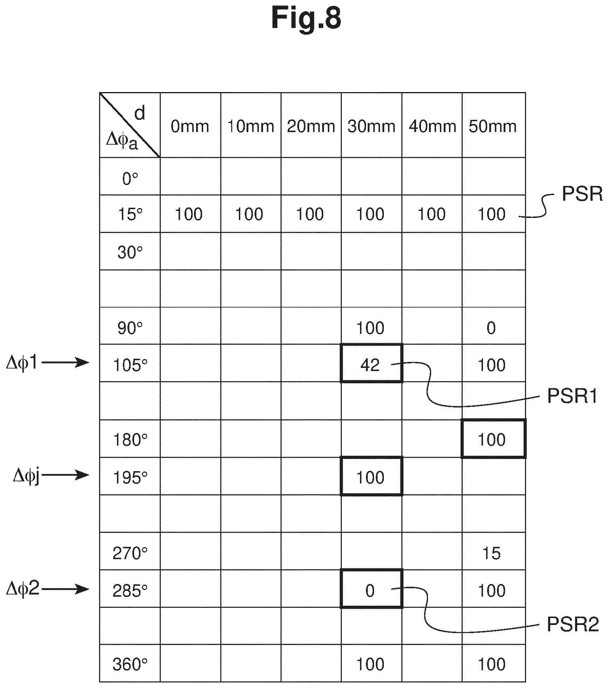

On se réfère maintenant aux figures 7 et 8 pour illustrer un exemple de détermination de la compensation de déphasage CmpΔϕ associée à une valeur donnée du paramètre, par exemple à une valeur donnée du paramètre RSSI et donc à une distance donnée d entre l'objet et le lecteur de référence.

Plus particulièrement, comme illustré sur la figure 7, pour une distance donnée d entre l'objet APP et le lecteur de référence, on effectue une mesure 70 du paramètre RSSI.

Puis, à l'aide des moyens de retard MRT, on applique au sein de l'objet APP, un certain nombre de déphasages internes Δϕi, par exemple ici I déphasages internes Δϕi, de façon que tous ces déphasages internes correspondent à des déphasages Δϕa au niveau de

l'antenne ANT2 de l'objet couvrant la plage 0° - 360° (Figure 8).

Dans l'exemple illustré, on peut appliquer une résolution sur $\Delta\phi i$ correspondant à une résolution de 15° sur $\Delta\phi a$.

Pour une valeur du déphasage interne $\Delta\phi i$, correspondant à une valeur du déphasage $\Delta\phi ai$, le lecteur de référence envoie dans l'étape 71 un paquet de commandes, ici 100 commandes, SENSF_REQ défini dans le protocole FeliCa.

Puis, dans l'étape 72, le récepteur reçoit 100 commandes SENSF_RES correspondant aux réponses envoyées par l'objet APP.

On peut alors déterminer au niveau du lecteur de référence un taux de décodage PSR des commandes reçues.

A cet égard, selon le lecteur de référence utilisé, on peut soit brancher une interface sur le lecteur de référence pour déterminer si la commande reçue est correctement décodée ou non. En variante, le lecteur de référence peut émettre un signal sonore spécifique si la commande reçue n'est pas correctement décodée.

On répète (étape 73) les opérations 71, 72 pour chaque incrément de déphasage $\Delta\phi i$ correspondant à un incrément de 15° sur le déphasage $\Delta\phi a$ au niveau de l'antenne de l'objet, jusqu'à couvrir toute la plage de déphasage 0-360° au niveau de l'antenne ANT2 de l'objet.

Puis, dans l'étape 74, on détermine pour la distance d les deux taux de décodage PSR1 et PSR2 les plus faibles.

Dans l'exemple illustré sur la figure 8, pour la distance d=30mm, les deux taux les plus faibles PSR1 et PSR2, respectivement égaux à 42 et à 0, correspondent à des déphasages internes $\Delta\phi 1$ et $\Delta\phi 2$ correspondant respectivement à des déphasages $\Delta\phi a$ au niveau de l'antenne ANT2 égaux à 105° et 285°.

La valeur médiane entre ces deux valeurs 105° et 285° est égale à 195°. Et, c'est à cette valeur médiane 195° que l'on obtient non seulement un taux PSR égal à 100% mais avec une amplitude de modulation LMA maximale, et en tout cas supérieure à un seuil prédéterminé, par exemple 95%.

A cette valeur de 195° pour le déphasage $\Delta\phi a$ au niveau de l'antenne, correspond un déphasage interne $\Delta\phi j$ déterminé dans l'étape 75.

La différence entre ce décalage interne $\Delta\phi j$ et la valeur nominale de ce déphasage interne correspond à la compensation de déphasage $Cmp\Delta\phi$ déterminée dans l'étape 76.

Il convient de noter que pour distance supérieure à une certaine valeur, par exemple 50 mm dans cet exemple, le couplage entre le lecteur et l'objet ne varie plus et il n'y a pas lieu d'appliquer de compensation de déphasage sur la valeur nominale $\Delta\phi$.

**Revendications**

1. Procédé de réglage d'un objet capable de communiquer sans contact par modulation active de charge avec un lecteur (RD) équipé d'un détecteur d'enveloppe, comprenant

   un étalonnage (50) de l'objet avec un lecteur de référence (RDR) du même type que ledit lecteur (RD), ledit étalonnage (50) comportant

   - un placement du lecteur de référence (RDR) à différentes distances (d) de l'objet correspondant à différentes valeurs d'un paramètre (RSSI) au sein de l'objet représentatif de l'intensité du signal reçu par l'objet, et pour chaque distance (d), une détermination au sein de l'objet d'une compensation de déphasage interne (Cmp$\Delta\phi$) par rapport à un déphasage interne nominal ($\Delta\phi$), permettant d'obtenir une amplitude de modulation de charge (LMA) supérieure en valeur absolue à un seuil, et
   - un stockage (51) dans l'objet d'une table de correspondance (LKT) entre les différentes valeurs dudit paramètre et les compensations correspondantes de déphasage interne, et

   lors d'une communication (61) avec ledit lecteur (RD) de l'objet ainsi étalonné (APP), une détermination (62) au sein de l'objet de la valeur dudit paramètre (RSSI) et une application automatique (64) dans ledit objet de ladite compensation de déphasage (Cmp$\Delta\phi$) correspondant à la valeur de ce paramètre, à partir de ladite table de correspondance stockée.

2. Procédé selon la revendication 1, dans lequel le seuil est fixé à 95% de la valeur maximale en valeur absolue de l'amplitude de modulation de charge (LMA).

3. Procédé selon la revendication 1 ou 2, dans lequel la détermination de la compensation de déphasage interne (Cmp$\Delta\phi$) permettant d'obtenir, pour une distance donnée, une amplitude de modulation de charge supérieure en valeur absolue audit seuil comprend une définition d'un jeu de déphasages internes compris entre 0° et 360°, et pour chaque déphasage dudit jeu,

   des envoi successifs (72) de commandes par le lecteur de référence et des émissions successives par l'objet de réponses auxdites commandes,
   une comptabilisation du taux (PSR) de réponses décodées avec succès par le lecteur de référence,

une détermination (74) des deux valeurs de déphasage correspondant aux deux plus faibles taux,

la valeur de ladite compensation de déphasage associée à ladite distance et permettant d'obtenir une amplitude de modulation de charge supérieure en valeur absolue audit seuil, étant la valeur médiane entre lesdites deux valeurs correspondant aux deux plus faibles taux diminuée de la valeur du déphasage interne nominal.

4. Procédé selon la revendication 3, dans lequel l'objet et le lecteur de référence communiquent selon le protocole de communication FeliCa défini dans la norme JIS.X.6319-4, et les commandes envoyées par le lecteur de référence sont des commandes SENSF_REQ définies dans la norme JIS.X.6319-4 et les réponses envoyées par l'objet sont des réponses SENSF_RES définies dans la norme JIS.X.6319-4.

5. Procédé selon l'une des revendications précédentes, dans lequel ledit objet comprend un moyen de contrôle automatique de gain (AGC), et lesdites valeurs du paramètre sont les valeurs du gain.

6. Procédé selon l'une des revendications 1 à 5, dans lequel ledit paramètre est une indication d'intensité du signal reçu (RSSI) par ledit objet.

**Patentansprüche**

1. Verfahren zum Einstellen eines Objekts, das dazu geeignet ist, durch aktive Lastmodulation kontaktlos mit einem Lesegerät (RD), das mit einem Hüllkurvendetektor ausgestattet ist, zu kommunizieren, umfassend

das Kalibrieren (50) des Objekts mit einem Referenzlesegerät (RDR) desselben Typs wie das Lesegerät (RD), wobei das Kalibrieren (50) Folgendes umfasst

- Platzieren des Referenzlesegeräts (RDR) in verschiedenen Abständen (d) vom Objekt, die verschiedenen Werten eines Parameters (RSSI) innerhalb des Objekts entsprechen, der die Intensität des vom Objekt empfangenen Signals darstellt, und Bestimmen einer internen Phasenverschiebungskompensation (Cmp$\Delta\phi$) innerhalb des Objekts in Bezug auf eine nominale interne Phasenverschiebung ($\Delta\Phi$) für jeden Abstand (d), wodurch ermöglicht wird, eine Lastmodulationsamplitude (LMA) zu erhalten, die als Absolutwert höher ist als ein Schwellenwert, und

- Speichern (51) einer Nachschlagetabelle (LKT) der verschiedenen Werte des Parameters und der entsprechenden internen Phasenverschiebungskompensationen im Objekt, und beim Kommunizieren (61) mit dem Lesegerät (RD) des so kalibrierten Objekts (APP), Bestimmen (62) des Werts des Parameters (RSSI) innerhalb des Objekts und automatisches Anwenden (64) der Phasenverschiebungskompensation (Cmp$\Delta\Phi$), die dem Wert dieses Parameters entspricht, im Objekt anhand der gespeicherten Nachschlagetabelle.

2. Verfahren nach Anspruch 1, wobei der Schwellenwert auf 95 % des maximalen Absolutwerts der Lastmodulationsamplitude (LMA) festgelegt wird.

3. Verfahren nach Anspruch 1 oder 2, wobei das Bestimmen der internen Phasenverschiebungskompensation (Cmp$\Delta\Phi$), die es ermöglicht, für einen gegebenen Abstand eine Lastmodulationsamplitude zu erhalten, die als Absolutwert höher ist als der Schwellenwert, das Definieren eines Satzes von internen Phasenverschiebungen zwischen 0° und 360°, und für jede Phasenverschiebung des Satzes, aufeinanderfolgende Sendungen (72) von Befehlen durch das Referenzlesegerät und aufeinanderfolgende Übertragungen von Antworten auf die Befehle durch das Objekt,

das Erfassen der Rate (PSR) von Antworten, die vom Referenzlesegerät erfolgreich decodiert werden,
das Bestimmen (74) von zwei Phasenverschiebungswerten, die den zwei niedrigsten Raten entsprechen, umfasst,
wobei der Wert der Phasenverschiebungskompensation, der mit dem Abstand verbunden ist und es ermöglicht, eine Lastmodulationsamplitude zu erhalten, die als Absolutwert höher ist als der Schwellenwert, der Mittelwert zwischen den beiden Werten ist, der den beiden niedrigsten Raten abzüglich des Werts der nominalen internen Phasenverschiebung entspricht.

4. Verfahren nach Anspruch 3, wobei das Objekt und das Referenzlesegerät gemäß dem im Standard JIS.X.6319-4 definierten FeliCa-Kommunikationsprotokoll kommunizieren und die durch das Referenzlesegerät gesendeten Befehle gemäß dem Standard JIS.X.6319-4 definierte SENSF_REQ-Befehle sind und die durch das Objekt gesendeten Antworten gemäß dem Standard JIS.X.6319-4 definierte SENSF_RES-Antworten sind.

5. Verfahren nach einem der vorhergehenden Ansprüche, wobei das Objekt eine automatische Verstärkungsregelungseinrichtung (AGC) umfasst und die Werte des Parameters die Verstärkungswerte sind.

6. Verfahren nach einem der Ansprüche 1 bis 5, wobei der Parameter ein Indikator für die Intensität des vom Objekt empfangenen Signals (RSSI) ist.

## Claims

1. A method for adjusting an object capable of communicating without contact by active charge modulation with a reader (RD) equipped with an envelope detector, comprising
a calibration (50) of the object with a reference reader (RDR) of the same type as said reader (RD), said calibration (50) including

   - a placement of the reference reader (RDR) at different distances (d) from the object corresponding to different values of a parameter (RSSI) within the object representative of the intensity of the signal received by the object, and for each distance (d), a determination within the object of an internal phase shift compensation (Cmp$\Delta\phi$) relative to a nominal internal phase shift ($\Delta\phi$), allowing to obtain a load modulation amplitude (LMA) greater in absolute value than a threshold, and
   - a storage (51) in the object of a correspondence table (LKT) between the different values of said parameter and the corresponding internal phase shift compensations, and during a communication (61) with said reader (RD) of the object thus calibrated (APP), a determination (62) within the object of the value of said parameter (RSSI) and an automatic application (64) in said object of said phase shift compensation (Cmp$\Delta\phi$) corresponding to the value of this parameter, from said stored correspondence table.

2. The method according to claim 1, wherein the threshold is set at 95% of the maximum absolute value of the load modulation amplitude (LMA).

3. The method according to claim 1 or 2, wherein the determination of the internal phase shift compensation (Cmp$\Delta\phi$) allowing to obtain, for a given distance, a load modulation amplitude greater in absolute value than said threshold comprises a definition of a set of internal phase shifts comprised between 0° and 360°, and for each phase shift of said set,

   successive sendings (72) of commands by the reference reader and successive emissions by the object of responses to said commands,
   a recording of the rate (PSR) of responses successfully decoded by the reference reader,

a determination (74) of the two phase shift values corresponding to the two lowest rates,
the value of said phase shift compensation associated with said distance and allowing to obtain a load modulation amplitude greater in absolute value than said threshold, being the median value between said two values corresponding to the two lowest rates reduced by the value of the nominal internal phase shift.

4. The method according to claim 3, wherein the object and the reference reader communicate according to the FeliCa communication protocol defined in standard JIS.X.6319-4, and the commands sent by the reference reader are SENSF_REQ commands defined in standard JIS.X.6319-4 and the responses sent by the object are SENSF_RES responses defined in standard JIS.X.63 19-4.

5. The method according to one of the preceding claims, wherein said object comprises an automatic gain control (AGC) means, and said parameter values are the gain values.

6. The method according to one of claims 1 to 5, wherein said parameter is an indication of the intensity of the signal received (RSSI) by said object.

# Fig.1

# Fig.2

# Fig.3

# Fig.4

# Fig.5

objet

50

d

distances

étalonnage

RDR

lecteur de
référence

LKT

gains,
RSSI

table

compensations
de déphasage
interne

CmpΔφi

stockage
table
dans objet

51

# Fig.6

communication

objet ◄► lecteur

APP        RD

61

détermination
gain / RSSI

62

LKT

table

détermination
compensation
de déphasage
interne CmpΔφ

63

compensation de Δφ

64

# Fig.7

```
                    d ⌐  ╭─────────╮
                          │ distance │
                          ╰─────────╯
                               │
                               ▼
        70 ⌐       ╭──────────────────────╮
                    │      mesure RSSI      │
                    ╰──────────────────────╯
                               │
                               ▼
                    ╭──────────────────────╮  ◄─────┐
                    │     Δϕᵢ i = 1 à I     │        │
                    ╰──────────────────────╯        │
                               │                    │
                               ▼                    │
                    ┌──────────────────────┐        │
                    │        envoi          │        │
        71 ⌐        │   100 commandes       │        │
                    │     SENSF_REQ         │        │
                    └──────────────────────┘        │
                               │                    │
                               ▼                    │
                    ┌──────────────────────┐    73 ⌐ │
                    │      réception        │        │
        72 ⌐        │   100 commandes       │        │
                    │     SENSF_RES         │   ┌──────────┐
                    └──────────────────────┘   │ i = i + 1│
                               │                └──────────┘
                               ▼                    ▲
                    ╭──────────────────────╮        │
       PSR ⌐        │      taux de          │        │
                    │     décodage          │        │
                    │    commandes          │        │
                    │      reçues           │────────┘
                    ╰──────────────────────╯
                               │
                               ▼
       74 ⌐         ┌──────────────────────┐
                    │     détermination     │
                    │  2 taux les plus faibles │
                    └──────────────────────┘
                               │
                               ▼
       75 ⌐         ┌──────────────────────┐
                    │     détermination     │
                    │          Δϕⱼ          │
                    └──────────────────────┘
                               │
   76 ⌐                        ▼
        ┌──────────────────────────────────────────┐
        │              détermination                 │
        │  compensation de déphasage CmpΔϕ          │
        └──────────────────────────────────────────┘
```

# Fig.8

| d / Δφ_a | 0mm | 10mm | 20mm | 30mm | 40mm | 50mm | |
|---|---|---|---|---|---|---|---|
| 0° | | | | | | | |
| 15° | 100 | 100 | 100 | 100 | 100 | 100 | PSR |
| 30° | | | | | | | |
| | | | | | | | |
| 90° | | | | 100 | | 0 | |
| Δφ1 → 105° | | | | 42 | | 100 | PSR1 |
| | | | | | | | |
| 180° | | | | | | 100 | |
| Δφj → 195° | | | | 100 | | | |
| | | | | | | | |
| 270° | | | | | | 15 | |
| Δφ2 → 285° | | | | 0 | | 100 | PSR2 |
| | | | | | | | |
| 360° | | | | 100 | | 100 | |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3451545 A2

- EP 3280065 A1